Europäisches Patentamt

European Patent Office

Office européen des brevets

(11) Publication number : **0 487 465 A1**

## (12) EUROPEAN PATENT APPLICATION

(21) Application number : **91830484.1**

(22) Date of filing : **07.11.91**

(51) Int. Cl.⁵ : **B61K 9/02, G01C 7/06**

(30) Priority : **13.11.90 IT 4846990**

(43) Date of publication of application :
**27.05.92 Bulletin 92/22**

(84) Designated Contracting States :
**AT CH DE ES FR GB GR IT LI SE**

(71) Applicant : **ENTE PER LE NUOVE
TECNOLOGIE, L'ENERGIA E L'AMBIENTE (
ENEA)**
**125 Viale Regina Margherita**
**I-00198 Roma RM (IT)**
(71) Applicant : **ENTE FERROVIE DELLO STATO**
**46 Piazza Ipolito Nievo**
**I-00153 Roma RM (IT)**

(72) Inventor : **Annunziato, Mauro**
**220 Via Tazio Nuvolari**
**I-00142 Roma RM (IT)**
Inventor : **Giammartini, Stefano**
**29 Via Ezio**
**I-00192 Roma RM (IT)**
Inventor : **Pieroni, Francesco**
**67 Via Luigi Angeloni**
**I-00149 Roma RM (IT)**
Inventor : **Franchini, Tullio**
**snc Viale Europa**
**I-00060 Formello RM (IT)**

(74) Representative : **Tonon, Gilberto et al**
**c/o Società Italiana Brevetti S.p.A. Piazza di
Pietra, 39**
**I-00186 Roma (IT)**

(54) **An automatic system for the detection of the internal contour of railway tunnels and the like.**

(57)   An automatic system for the detection of the internal contour of railway tunnels and the like using television-type detection means (7) or the like cooperating with specialized lighting means (5), the whole operating together with computing systems (13) in order to obtain surveys regarding the internal contour of railway tunnels and the like. For instance, for the ascertainment of whether the limit contour for special cargoes may encounter problems in the transit along a certain stretch of railway.

FIG.1

The present invention relates to an automatic system for the detection of the internal contour of railway tunnels and the like. More in particular the present invention relates a system of the above mentioned kind using detection means of the television type, or the like, cooperating with specialized lighting means, the whole operating together with computing systems in order to obtain surveys regarding the internal contour of railway tunnels and the like. The obtaining of surveys of the internal contour of railway tunnels and the like is particularly important, for instance to ascertain whether the outmost contour of special cargoes may encounter problems when travelling along a predetermined stretch of railway.

At present, the survey of the free sections of tunnels and the check, in several significant points, of the distance between the walls of the tunnel and the vehicle are performed by means of a direct measurement of the distances with measurement tapes or rods, not before having cut off the supply of electric power when electric locomotives are operating on the railway.

Such detection consists in performing direct measurements of the distances from point to point of the internal walls of the tunnel, and in the direct measurement of the distances existing between a limit contour (which materializes the transversal maximum encumbrance which a vehicle may show) and the internal wall of the tunnel.

The detection of the position of obstacles is performed by using a railway car suitably equipped, whereon a limit contour is assembled on which, at various heights from the plane of the rails, flexible metal blades are applied. These blades may protrude towards the exterior for a length that may be varied and that can be measured. By running the car along the line, the blades touch possible obstacles, and the variable length of said protruding blades makes it possible to measure the distances of the obstacles with respect to the contour; the minimum distances, detected for each height from the plane of the rails, referred to on a graph, determine, when they are connected together, a broken connection line: the minimum contour of the obstacles.

Owing to the complexity of this method for these measurements, these surveys are not performed in a systematic way in correspondence with all the possible sections of the tunnel, but they are performed only in correspondence with those sections which result more critical according to the judgment of the person who has to perform the survey. In such sections, as above stated, there are then measured only the distances relating to some points which are considered more significant, for instance in correspondence with the vertexes of the limit contour.

At present, in the field of railways, devices have been introduced using ultrasound methods or laser ray methods, for a reconstruction point-by-point of the free section of the tunnel.

However, the proposed systems known from the state of the art do not resolve the above stated problems satisfactorily.

The aim of the present invention is to provide a system of the above mentioned kind, that makes it possible to perform quantitive measurements of the internal contour of railway tunnels and the like, with a relatively simple equipment, that can be mounted on a railway car which is made to run along the rails of the tunnel or the like.

According to the present invention, the automatic system for the survey of the internal contour of railway tunnels and the like, and of the possible interference with the limit contour of a particular vehicle or cargo, includes, on a railway car, means for forming a blade of light directed to sweep all the part of the internal contour of the tunnel or the like of which a quantitative measurement of the dimension is required; optical pick-up means such as a TV camera arranged for the pick-up of image of the illuminated area by said blade of light at intervals correlated with the thickness of said blade of light and with the resolution that is required in the sense of the length of the tunnel or the like; means for recording the images picked up by said TV camera, means for the processing of the recordings thus obtained in order to obtain a reconstruction of the development of the internal contour of the railway tunnel or the like.

Still according to the present invention, means are provided for recording, at the same time as the images, data of interest for the complete characterization of the information relating to the contour of the tunnel or the like, such as the progressive distance travelled in kilometers starting from a predetermined reference point, curvature, superelevation of the rails and the like.

The present invention will now be disclosed with reference to a preferred embodiment thereof, referred to as an illustrative and non limiting example, and with reference to the figures of the attached drawings, wherein:

figure 1 shows schematically the structure of the system according to the present invention, divided into a movable unit or survey and pick-up of information, and a fixed unit for the processing and restitution of information;

figure 2 shows schematically the illumination technique for the detection of information for a typical railway tunnel;

figure 3 shows a typical image of a television frame in the pick-up of images;

figure 4 shows an enlarged detail of the image shown in figure 3;

figure 5 shows a detail similar to that of figure 3, after performance of some logical operations;

figure 6 is a diagram showing a part of the trend of the video signal on a typical television scan line;

figure 7 shows a representation of the behaviour of the distribution of values of grey in a typical TV image;

figure 8 and figure 9 show criteria for the image processing;

figures 10, 11 and 12 show data compression criteria relating to a contour;

figure 13 shows a flow diagram relating to a part of the data processing procedure;

figure 14 shows the whole procedure for the obtainment of the minimum of the envelope of the internal contours of the tunnel and for analyzing the interference with a limit contour;

figure 15 shows an example of a result of operations directed to obtaining the envelope of contours of the tunnel; and

figure 16 shows an example of a result of processing that puts into evidence an interference situation at the passage of a particular contour on a section of railway.

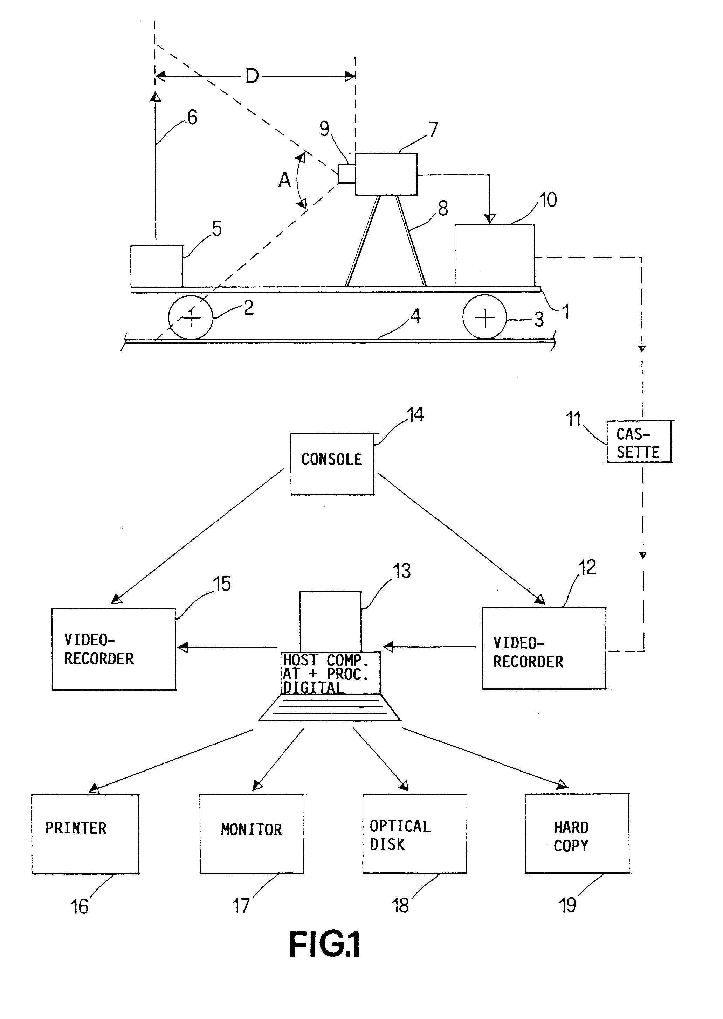

With reference to the drawings, and in particular to figure 1, a railway type car is shown therein, indicated as a whole in 1, mounted in a known way on wheels 2, 3 and travelling on rails 4. Aboard the car 1 there is located a light source 5 emitting a blade-like beam, schematically shown in 6, arranged for illuminating as far as it is possible the whole internal contour of a railway tunnel or the like. The image of the internal wall of the tunnel (contour) together with other possible components of the railway superstructure (electrical lines, components fastened to the walls of the tunnel, protrusion of rocks or the like) is picked up by a TV camera 7 arranged on a support 8 and provided with pick-up optics 9 having a shooting angle A sufficient, taking into account the distance D between the impingement point of the blade of light 6 on the contour of the tunnel, for shooting the whole image on the pick-up element with which the TV camera set is provided.

The video signal provided by the TV camera 7 is sent to a video tape recorder indicated as a whole in 10. The video tape recorder is arranged in a manner clear to a person skilled in the art, for recording, besides the video signal, auxiliary signals, such as signals related to the path travelled by the car 1, for instance by means of an odometer associated to the wheels of the car, the date of the recording, the progressive number of the video frame, the travelling speed and the like, which will be useful for the processing of video signals and in the restitution of the data relating to the behaviour of the internal contour of the tunnel.

As it can be seen in figure 1, the video recorder 10 arranged aboard the car 1 will provide a cassette of recorded tape 11 that is transferred to the so-called "fixed unit" to be played back by means of a video recorder 12.

A computer 13 and a control console 14 process the video signal and the auxiliary information read-out from the cassette 11 and the video signal is fed by the computer 13 onto a second video tape recorder 15.

In the following, the processing performed by the computer 13 will be detailed.

The computer 13 is arranged in a known way, for controlling peripherals such as a printer 16, a high resolution monitor 17, a permanent mass data storage such as an optical disk memory 18, and a hard copy image recorder shown in 19.

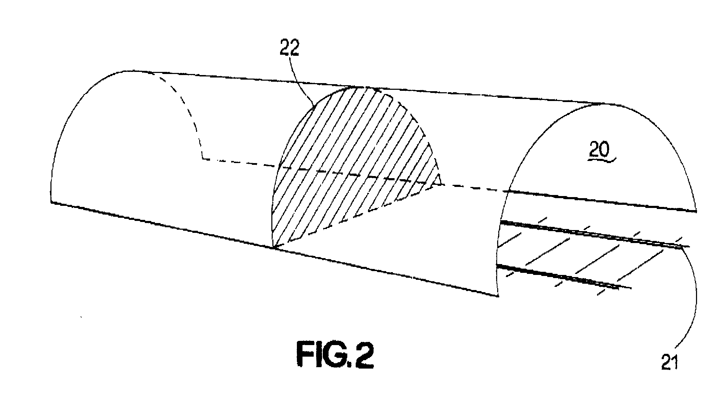

With reference to figure 2, there is shown schematically in perspective the blade of light technique as it is employed in the present invention. In 20 is generally shown the ideal internal contour of a railway tunnel, in 21 rails are indicated whereon the car schematized in figure 1A can travel, and in 22 the blade of light, i.e. a beam of light having a small thickness with respect to the magnitude of the smallest element to be detected along the length of the tunnel 20, and that illuminates the whole contour, the survey of which has to be performed.

As a consequence of an illumination of this kind, the TV camera 7 of figure 1A will see a pattern approximately corrisponding to the contour with deformations and/or drop-outs in correspondence with the variations of the contour of the interior of the tunnel and/or obstacles which are or are not part of the railway superstructure.

If, as in the preferred embodiment, the image sensor of the TV camera 7 is a sensor of the solid state kind (CCD or the like) and of the frame transfer type well known in the technique of TV shooting, that makes it possible to perform image pick-up as "snap shot" rather than by a conventional raster scanning, the TV camera 7 will provide to the video recording unit 10 (figure 1A) a sequence of images with a resolution given by the number of pixels that can be resolved by the sensor, and with a resolution in the sense of the path of the car 1 along the rails 4, depending upon the speed of travel of the car 1 and by the exposure rate (50 Hz or 25 Hz according to whether the fields or the frames of the TV image that is going to be recorded are considered).

The signal coming from the TV camera 7 recorded on the video tape recorder 10, is however a "raw" video signal that must be subjected to a number of processing operations in order to obtain the useful final information.

In order to better understand the nature and the sequence of such processing operations, reference should be made to figures 3, 4, 5, 6 and 7.

In figure 3 there is shown the image of the blade of light on the impingement against the internal contour of the tunnel, represented in negative for convenience of graphic representation, and shown in 23. This image will have a grey background, not shown in the figure, with a variable density and deriving from the scattered light within the interior of the tunnel, and mainly in correspondence with the entry and exit of the tunnel.

The part 23 of the image representing the "white" produced by the blade of light above referred to, will have a "white" level that may change according to the "colour" of the walls of the tunnel.

In order to proceed with the processing of the TV type information it is naturally necessary to digitalize, or better still to binarize the image. In order to proceed to binarization of the image, that is to say a representation of 1 and 0 alone, it is necessary to establish a threshold, as is well known to a person skilled in the art, both when the digitalization (or better binarization) is performed via software and when the same is performed via hardware. The binarization threshold may be determined when the adjustment of the apparatus is performed, or may be set at any moment by an operator. A fixed threshold is not convenient because it would be too rigid, and one controlled only by the operator is also not convenient because too bound to subjective criteria. According to the invention, the binarization threshold is preferably of an adaptive and automatic kind in order to obtain consistent results in the presence of random variables such as the "colour" of the interior of the tunnel.

To this end, there is computed for each image the optimum value of the binarization threshold as will be explained below.

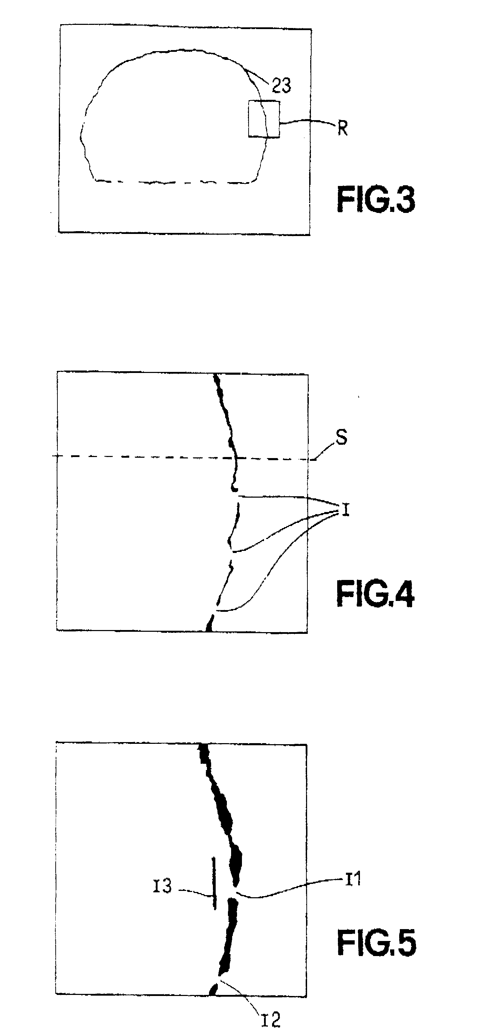

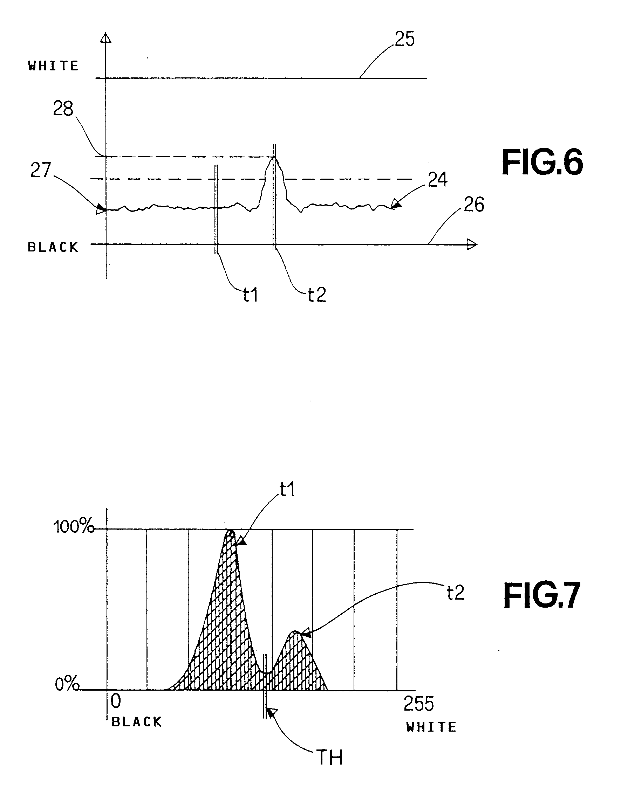

With reference to figure 6, there is shown a part of a general scanning line of the TV image like the one shown with S in figure 4, wherein the video signal 24 can go from a level 25 which represents the "absolute white" and a level 26 which represents the "absolute black". In an actual situation, the signal corresponding to the "grey" of the tunnel will be, for instance, around about the level shown in 27, and the white of the blade of light, will be for instance at the peak level shown in 28. Having performed beforehand an A/D conversion of the image signal and therefore a sampling for all the pixel that constitute a TV scan line and by repeating said operation for all the lines forming the television image, following computation procedures known from "pulse height analyzers", a distribution of values of the kind shown in figure 7 will be obtained.

As it may be noted from figure 7, on the abscissa are shown the grey values, 0 for the black, 255 for the white (when an A/D conversion is performed over 8 bit), and on the ordinate the percentage values normalized to 100, for each sample of the image. It can be noted that there will be a "bimodal" distribution with two peaks: a first peak normalized to 100 for the values of the background grey (corresponding to the sampling point for instance $t_1$ of figure 6, and a second peak corresponding to the points of white $t_2$ of figure 6). The two peaks will be separated by a saddle in correspondence of which there is fixed with computation procedures well known to a person skilled in the art the threshold value TH in correspondence of which the binarization of the image will be performed. In other words, the values to the right of TH will be, for instance, considered at a logic level 1, while those to the left will be considered at a 0 logical value. In figure there is shown the binarization of the part of image that was represented in figure 3 enclosed in the rectangle R, and in figure 5 the logical sum of a plurality of binarized images (a logical OR operation).

It is convenient to remark at this point that with what has been described, even if valid from a theoretical point of view, several problems are encountered in its reduction to practice. One of the problems is that of the noise, for instance the elimination of single non-significant pixels, but other problems arise from the fact that the peak of the white in correspondnce of $t_2$ in figure 6, will generally have a variable amplitude, and consequentlyy the validity of the threashold value TH of figure 7 has to be intended only in a statistical sense but not for all the points of the sigle images. This fact leads to the lack of significant pixel for the subsequent reconstruction of the contour of the railway tunnel. Consequently, both the single binarized images exemplified in figure 4 and the sum image shown in figure 5, are generally not connected in a topological sense. As a matter of fact, in figure 4 one may note interruptions I, in figure there are interruptions in I1, I2, and a separate part of image I3 that is not connected with the remainder.

In order to obtain a set of images that reproduces the internal contour of the tunnel with conservative criteria, i.e. of maximum safety, it is necessary, via software, a connection operation of the contours for the construction of the missing parts of the contour as it is shown in figure 5.

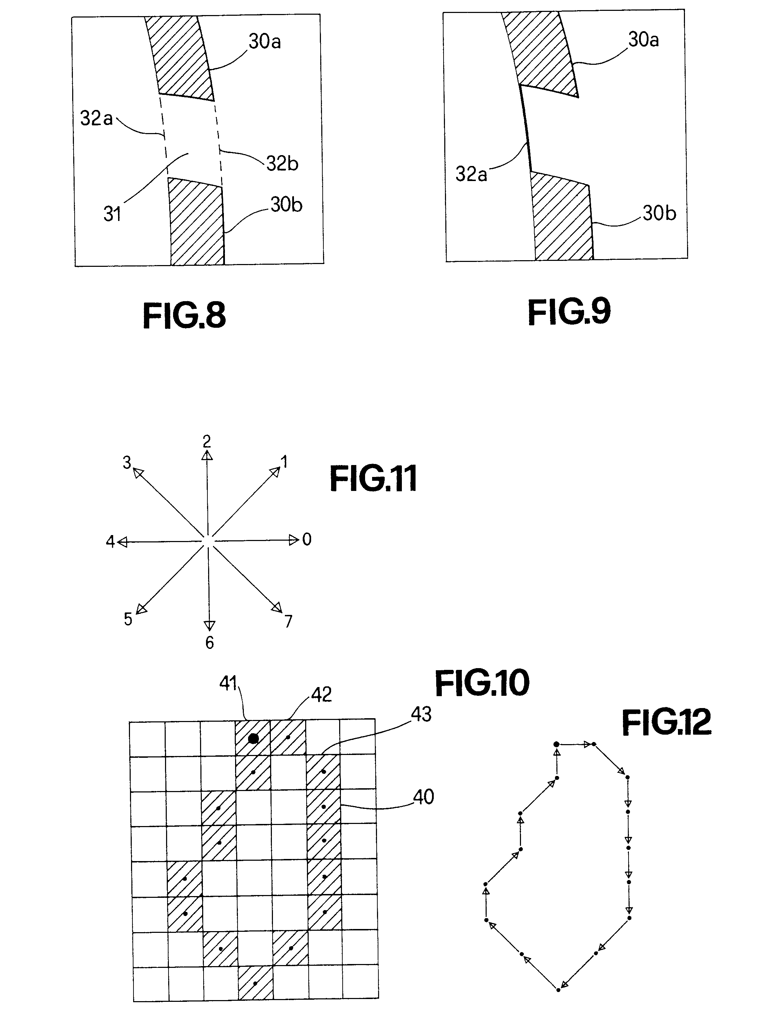

With reference to figure 8, there is shown as an example, and very enlarged, a portion of non-connected contour, such as for instance the one corresponding to the part I2 of figure 5. As it can be seen in figure 8, the dashed areas 30a, 30b represent two non-connected parts of the contour, separated by the part 31 about which information is lacking. The contours 30a, 30b of figure 8, may be connected by means of two possible strokes that span the part 31, shown in 322a and 30b, respectively, represented by a dotted line. Assuming that the free part of the tunnel is located at the left of the parts 30a, 31, 30b, a conservative connection will be that one corresponding to a connection line shifted towards the interior of the tunnel, i.e. the connection line 32a as it is shown in figure 9. A procedure of this kind is extremely important, because the areas 30a, 30b may assume a relatively great thickness, owing to the fact that they correspond to the logic sum (OR) of n contours, that may be several thousand. The reasons for performing the conservative connection operation like the one shown in 32a on an image constituted of the sum of several elementary images, rather than on the single images like those shown in figure 3, stems from the fact that the electronic processor that performs the connection operation requires a certain time for performing such operation. Consequently, for the economy of the system, it is advisable, in order to avoid prolonging the processing times too much, to perform this conenction operation only on the images which represent a given number n of contours. The selection of the number n will be dictated by a compromise between the precision of the surveys and an excessive prolongation of the working times.

As will be shown hereinafter, the images subjected to connection processing may be recorded on an auxilliary video tape recorder.

When it is decided to perform a mass storage of a digital kind, it is advisable to perform a "skeletonization" operation, i.e. of compression of the image area of the connected contours, in the sense of taking only the "center of gravity" pixels of the areas 30a, 30b, 32a of figure 9. This procedure is known in the art as a skeletonization procedure, and makes it possible to obtain a contour which is "compressed" and reduced to the essential information.

An alternative procedure for the data compression, is that of providing to the conversion of the images of connected and skeletonized contours by means of branching codes that describe the trend of the contour. Such a procedure is shown with greater detail in figures 10, 11 and 12. As one may remark from figure 10, a general contour is shown in 40 and is constituted of a sequence of elementary pixels 41, 42, 43 with a trend in the two dimensions of the plane defined and corresponding to the internal contour of the tunnel or the like. With a procedure that starts for instance from pixel 41, and subsequently follows pixel 42, 43 and so on until returning to pixel 41, it is possible to compress from the information processing standpoint the image, following direction codes like those shown in figure 5. The "compass rose" shown in figure 5 shows the different directions of connection vectors between contiguous pixels. For instance, in passing from pixel 41 to pixel 42, the direction code "O" will be used; in passing from pixel 42 to pixel 43 the direction code "7" will be used, and so on until building a code sequence like the one shown in figure 12, which is a purely numerical representation of the trend of contours substantially unbound from the bidimensionality of the image shown in figur 10. In such a way, it is possible to obtain very high compression values that make it possible to memorize great quantities of information in relatively limited storage spaces.

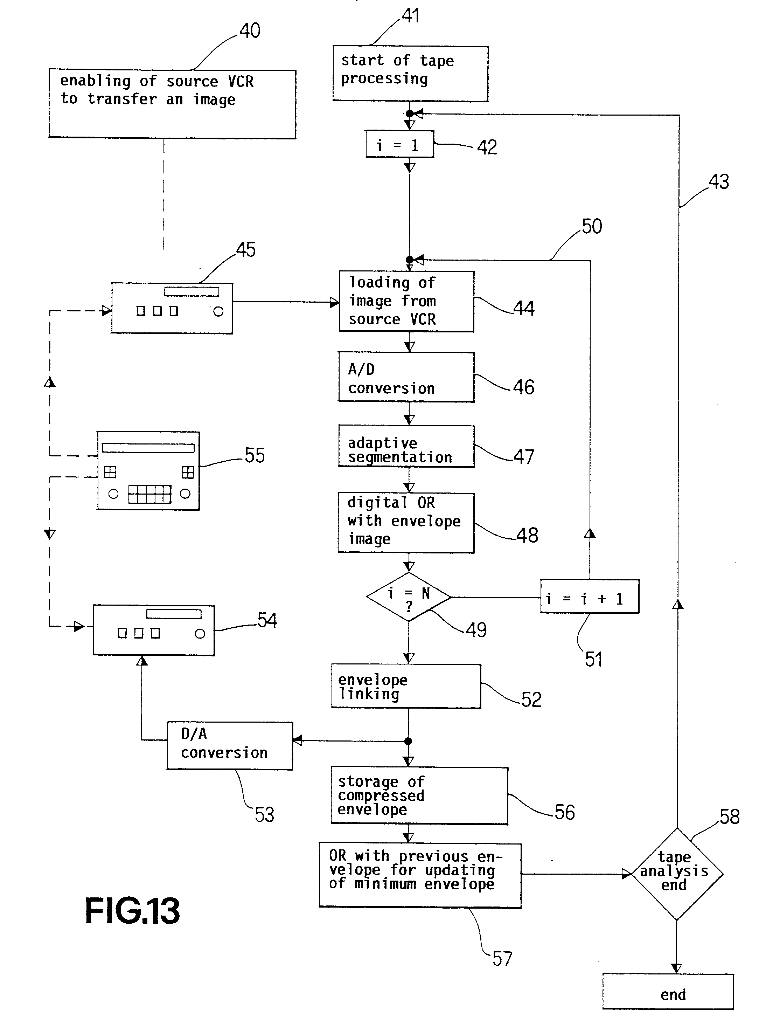

With reference to figure 13, there will now be disclosed in an organic way and in terms of flow diagram, the whole of the procedures for the analysis that have been previously illustrated.

Box 40 and box 41 represent, respectively, the enabling of the source video tape recorder to the transfer of an image, and the start of the procedure for processing the information contained on the tape. The block 42 represents a counter for counting the N operations performed following the main loop 43.

From box 42, the sequence passes to block 44 that represents the loading of an image from the source video tape recorder 45. This image is in an analog form and as a "raw" video signal like the one shown in figure 3, corresponding to that coming from the video camera 7 of figure 1. The signal coming from box 44 is subjected, in box 46, to a high speed analog to digital conversion (to provide order of mgnitude numbers, when a C.C.I.R. standard of TV pick-up is used, with a sampling clock of about 14 MHz).

As an example, the analog-to-digital conversion is performed over 8 bits selecting in this way 256 levels of grey and the digital result is stored in a frame memory. In box 46, the digital information contained in the frame memory is subjected to the binarization operation with an adaptive threashold as discussed hereinbefore. At the output of box 47, the image will be constituted of a set of logic "0" and "1". The information of interest is in the condition exemplified in figure 4.

At this moment, in box 48 there is performed the logic OR operation of the i-th image with all the precedeing images in order to arrive at the result shown in figure 5.

In the decision box 49 there is checked whether the number "i" has reached the number N. In the negative, the loop 50 is followed and the recirculation counter of the loop 50 is incremented by means of the counter 51.

If the number "i" of the current image has arrived at the value N, the decision box 49 activates box 52, that provides for performing the conservative connection operations formerly discussed with reference to figures 8 and 9.

The signal at the exit of box 52, is subjected to an analog-to-digital conversion in box 53, and sent to a secondary video tape recorder 54 for the possible safety storage on magnetic tape.

The source video tape recorder 45 and the secondary video tape recorder 54 are under the control of a console 55 which provides for the coherence of operation of the video tape recorders 45 and 54, taking into account enabling signals provided by the processor which performs all the previously described operation under the control of a specialized software.

The software is not disclosed in futher detail, because a person skilled in the art is able to develop the necessary codes.

The information available on the output of box 52 is then sent to box 56 of development of the data compression detailed in the discussion of figures 10, 11 and 12, and subsequently stored into a mass storage.

At the same time, the compressed information is sent to box 57, where it is subjected to logical OR with envelope results derived from previous analysis operation (a number of K operations, each constituted of N analysis operations).

The conclusion of the operations in block 57 is communicated to the decision block 58 for checking whether the analysis and the processing of the contents of the whole tape that is being read in the source video tape recorder 45 has been completed. In the negative case, the operations are repeated following the loop 43. In the affirmative case, there is produced (59) a signal of end of end of procedures on the tape contained in the source tape recorder 45.

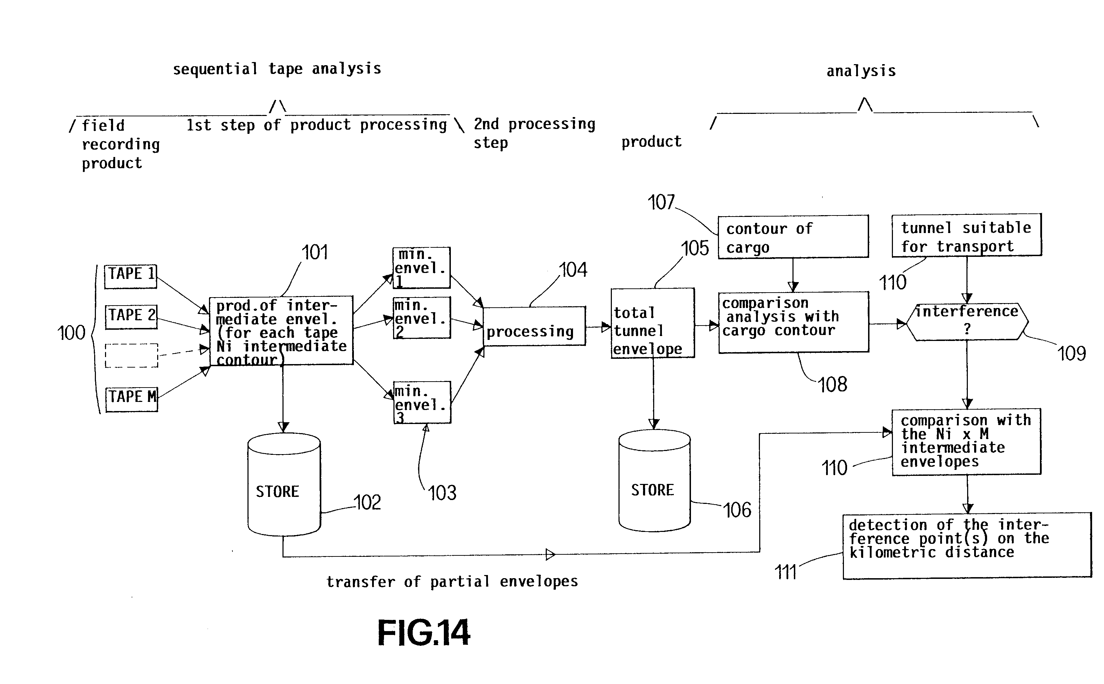

With reference now to figures 14, 15 and 16, the system according to the invention will be disclosed as a whole, which includes the sub-system illustrated with reference to the flow diagram of figure 13. As one can see in figure 14, in the first processing step one starts from a set of video tapes 100 performing in 101 the production of intermediate envelopes of the internal contour of the tunnel or tunnels. The results of the operation 101 are stored in a digital form in a first mass memory 102. The result of the operation 101 is also a set of information blocks 103 constituted of classifications of minimum envelopes.

The information blocks 103 are subjected to a second processing step in 104 for producing the total envelope of the tunnel in 105 that is possibly subjected to storage in a second mass memory 106. In the analysis step, an information packet 107 relating for instance to the overall clearance of a special transport is subjected to comparative analysis in block 108 for providing in decision block 109 a "declaration" of existance of an interference or not. In the case of a negative declaration, one obtains the "declaration" of a tunnel suitable for the transit in 110, and with this the operations are finished.

In the cse of an affirmative "declaration" from block 109, there is performed a transfer of a partial evelope from the mass memory 102 and in 110 the comparison is performed with the contour of the cargo for the identification of the point or points of interference that is displayed in the most suitable way in 111.

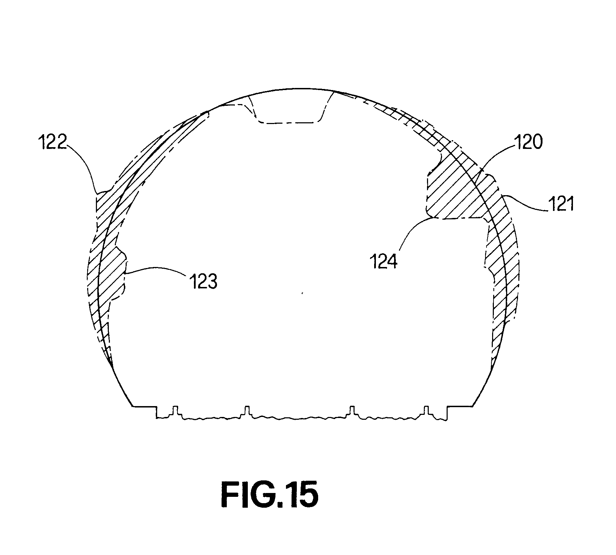

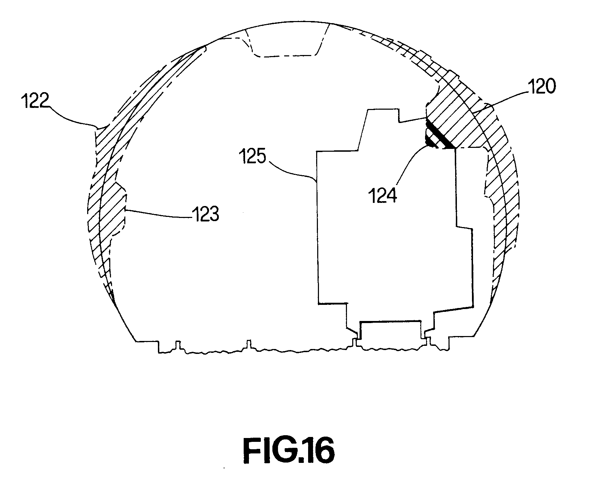

In figures 15 and 16 there are shown the results of the logical OR operation of all the contours. It is noted in figure 15 that in some point the ideal contour of the tunnel shown in 120 is enlarged, for instance in 121, 122, and it is narrowed, for instance in 123, 124.

In figure 16 there is shown a situation of interference between the narrowing 124 of the tunnel in a certain point, and a limit contour 125 of a special cargo.

The detection of the point or points of the line which have given origin to the narrowing 124 will allow a decision to be made as to the possible performance of some enlargement work, or the choice of another railway route, or the conclusion that such transport is not feasible.

## Claims

1. An automatic system for the detection of the internal contour of railway tunnels and the like, characterized in that it comprises on a car movable along said railway tunnel or the like, means for constituting a blade of light directed to sweep all the part of the internal contour of the tunnel or the like of which a quantitative measurement of the internal dimensions must be performed; optical pick-up means such as a TV camera arranged for the pick-up of the area illuminated by said light blade, at intervals correlated with the thickness of said blade of light and with the requested resolution along the length of the tunnel or the like; recording means for the images picked up by said TV camera, and processing means for the thus obtained recordings in order to obtain a reconstruction of the behaviour of the internal contour of the railway tunnel or the like.

2. An automatic system according to claim 1, in which said car is a railway car.

3. A system according to claims 1 or 2, in which said processing means comprise a processor arranged for performing the binarization of the images coming from said TV camera and recorded on said recording means, and for performing a conservative connection of the contour derived by means of connection of image elements, and for summing repeated contours corresponding to a stretch of the tunnel in order to obtain an envelope information correlated with the minimum internal contour of the railway tunnel or the like.

4. A system according to claim 3, in which said envelope information are stored on further recording means.

5. A system according to claim 4, in which said processing means include means for the storage of a limit contour and comparison means arranged for detecting possible interference between said limit contour and the envelope of the contours.

6. A system according to claim 5, in which it comprises means for the storage of progressive distances starting from a determined reference point, and means for identifying the contours that produce interference as a function of said progressive distance.

7. A system according to one or more of the preceding claims, in which said processing means are arranged for providing a reconstruction of the trend of the contours in a compressed way by means of the construction of a vector chain having length and orientation correlated with the trend of the contours, and means for the storage in a digital type mass storage of the data relating to said reconstruction in a compressed way.

8. A system according to one or more of the preceding claims, in which said binarization is performed in said processor by means of program means arranged for deriving a bimodal distribution of the grey values of the video signal corresponding to the pick-up of said TV camera, arranged for deriving a threshold value in correspondence of the saddle point of said bimodal distribution, and for performing said binarization taking as a threashold value the level of grey that corresponds to the saddle point of said bimodal distribution.

9. A system according to one or more of the preceding claims, in which said TV camera is of the kind with an electro-optical sensor of semiconductor matrix type.

FIG.1

FIG.2

**FIG.3**

**FIG.4**

**FIG.5**

10

FIG.6

FIG.7

**FIG.8**

**FIG.9**

**FIG.11**

**FIG.10**

**FIG.12**

40

enabling of source VCR
to transfer an image

41

start of tape
processing

i = 1 — 42

43

45

50

loading of
image from — 44
source VCR

A/D — 46
conversion

adaptive — 47
segmentation

digital OR
with envelope
image — 48

i = N
? 

i = i + 1

51

49

envelope
linking — 52

D/A
conversion — 54

53

storage of
compressed — 56
envelope

55

OR with previous en-
velope for updating
of minimum envelope

57

58

tape
analysis
end

end

**FIG.13**

sequential tape analysis

analysis

/ field recording product | 1st step of product processing | 2nd processing step | product

**FIG.14**

**FIG.15**

**FIG.16**

European Patent Office

**EUROPEAN SEARCH REPORT**

Application Number

EP 91 83 0484

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 306 426 (CHEMETRON CORPORATION) * page 4, line 26 - page 12, line 19; figure 1 * | 1-9 | B61K9/02 G01C7/06 |
| | --- | | |
| A | US-A-3 168 023 (D. E. HARMON) * column 2, line 10 - column 3, line 53; figures 1-3 * | 1 | |
| | ----- | | |
| | | | TECHNICAL FIELDS SEARCHED (Int. Cl.5) |
| | | | B61K G01C G01B |

The present search report has been drawn up for all claims

| Place of search | Date of completion of the search | Examiner |
|---|---|---|
| THE HAGUE | 08 JANUARY 1992 | CHLOSTA P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)